# EUROPEAN PATENT APPLICATION

(11) **EP 3 671 282 A1**
(43) Date of publication of application: **24.06.2020**
(21) Application number: 18214683.7
(22) Date of filing: 20.12.2018
(51) Int. Cl.: G01S 19/21, H04W 12/10, H04W 4/02, H04W 12/00, H04W 12/12

(54) **GNSS ANTI-SPOOFING**

(71) Applicant: HERE Global B.V., 5611 ZT Eindhoven (NL)
(72) Inventor: TURUNEN, Marko, 37470 Vesilahti (FI); LU, Dongsheng, 33950 Pirkkala (FI); RISTO, Aho, 33960 Pirkkala (FI); KOHONEN, Tomi Antti Tapani, 33100 Tampere (FI); SEPPÄLÄ, Olli Pekka Juhana, 33710 Tampere (FI); LAPPALAINEN, Jukka, 33100 Tampere (FI); LAUKKONEN, Marko, 33100 Tampere (FI)
(74) Representative: Cohausz & Florack

(57) **Abstract**

It is inter-alia disclosed a method comprising obtaining a GNSS related position associated with the mobile device; obtaining one or more GNSS related update parameters; obtaining a reference position associated with the mobile device; and determining, at least partially based on the one or more GNSS related update parameters and the reference position, whether the GNSS related position is expected or unexpected for a position of the mobile device.

## Description

### FIELD OF THE DISCLOSURE

The invention relates to the field of GNSS positioning and more specifically to determine whether a GNSS position may be considered to be potentially manipulated.

### BACKGROUND

Location-based applications are very popular in mobile devices nowadays. Based on a location chose, people use mobile applications to search hotel, restaurant, entertainment or friends, and use also for shopping or ordering a taxi etc. Location-based applications are becoming "must have" applications in people daily life. Global Navigation Satellite System (GNSS), like the global positioning system (GPS) or the Galileo system, is very important navigation technology for location-based applications, especially in outdoor environments. For example, taxi-hailing applications like Uber and Didi, which use GNSS to dispatch requests to drivers, navigating and calculate arrival time and fares etc.

Along with the booming of location-based applications, GNSS spoofing has been raised as a hot issue. In Google play store, there are plenty of GNSS spoofing applications that provide fake GNSS locations. For example, a rogue driver uses GNSS spoofing application to set a fake location in taxi-hailing applications to cheat money from Uber or Didi.

### SUMMARY OF SOME EMBODIMENTS OF THE INVENTION

GNSS-based radio positioning systems as disclosed above may be affected by manipulating a GNSS position (e.g. by a fake GPS application running on a mobile device).

Such manipulation techniques are a threat to business models which rely on trustworthy positioning like car sharing services. It is inter-alia an object of the present invention to improve the above disclosed GNSS based radio positioning systems to enable mitigating the threat associated with such manipulation techniques.

According to an exemplary aspect of the invention, a method is disclosed, performed by a mobile device or a component of a mobile device, wherein the method comprises:
- obtaining a GNSS related position associated with the mobile device;
- obtaining one or more GNSS related update parameters;
- obtaining a reference position associated with the mobile device; and
- determining, at least partially based on the one or more GNSS related update parameters and the reference position, whether the GNSS related position is expected or unexpected for a position of the mobile device.

According to the exemplary aspect of the invention, furthermore, a mobile device or a component of a mobile device is disclosed, which comprises means for at least partially realizing the method according to the exemplary aspect of the invention. The means of the apparatus may be implemented in hardware and/or software. They may comprise for instance at least one processor for executing computer program code for realizing the required functions, at least one memory storing the program code, or both. Alternatively, they could comprise for instance circuitry that is designed to realize the required functions, for instance implemented in a chipset or a chip, like an integrated circuit. In general, the means may comprise for instance one or more processing means such as a processor and a memory. Optionally, the apparatus may comprise various other components, like a radio interface, a data interface, a user interface etc.

For example, the mobile device or a component of a mobile device comprises at least one processor and at least one memory including computer program code, the at least one memory and the computer program code configured to, with the at least one processor, cause a mobile device at least to perform at least partially the method and/or the steps of the method according to the exemplary aspect of the invention.

According to the exemplary aspect of the invention, a computer program code is disclosed, the computer program code when executed by a processor causing an apparatus (e.g. the mobile device) to perform realizing the method according to the exemplary aspect of the invention.

According to the exemplary aspect of the invention, furthermore, a system is disclosed, which comprises the mobile device or the component of a mobile device.

A mobile device may be an Internet-of-Thing (IoT) device, a smart home device, a smartphone, a tablet computer, a notebook computer, a smart watch, a smart glass and a smart band.

As an example embodiment, said GNSS related position is considered to be potentially manipulated if it is determined that said GNSS related position is unexpected for a position of the mobile device.

As an example embodiment, the GNSS related position is determined to be unexpected: (i) if said one or more GNSS related update parameter are at least partially inconsistent with the GNSS related position; and/or (ii) if a comparison between the reference position and the GNSS related position indicates an unexpected GNSS related position.

As an example embodiment, the GNSS related position is determined to be expected: (i) if said one or more GNSS related update parameters are consistent with the GNSS related position; and/or (ii) if a comparison between the reference position and the GNSS related position indicates an expected GNSS related position.

As an example embodiment, said comparison between the reference position and the GNSS related position comprises determining a representative of a distance between the reference positon and the GNSS related position, and, checking whether the distance indicated by the representative of a distance between the reference positon and the GNSS related position is above a threshold, and if yes, determining the GNSS related position to be unexpected, and, in particular, if not, determining the GNSS related position to be unexpected.

As an example embodiment, wherein said one or more GNSS related update parameters comprise at least one of: (i) at least one GNSS engine status update parameter; (ii) at least one GNSS satellite measurement update data.

As an example embodiment, said at least one GNSS satellite measurement update data comprise raw data and/or computed information.

As an example embodiment, it is determined whether said one or more GNSS related update parameters are at least partially inconsistent with the GNSS related position.

As an example embodiment, the aspect of the invention comprises tracking said one or more GNSS related update parameters, wherein said determining whether said one or more GNSS related update parameters are at least partially inconsistent with the GNSS related position comprises analyzing a history of platform GNSS engine status update parameter and/or GNSS satellite measurement update data.

As an example embodiment, wherein said reference position associated with the mobile device is obtained based at least partially on a non-GNSS positioning or is obtained from a specific GNSS provider, in particular a customized GNSS provider.

As an example embodiment, said non-GNSS positioning is at least one of: (i) a radio-network based positioning, and (ii) a sensor-based positioning.

As an example embodiment, said sensor-based positioning is based on sensor information determined from at least one of the following sensors: an inertial or motion sensor; a shock sensor, a magnetometer, and an optical sensor.

As an example embodiment, wherein said radio-network based positioning is one of: (i) a cellular-based positioning, in particular, a cellular-phone-system-based positioning; (ii) a WLAN-based positioning; (iii) a Bluetooth-based positioning, in particular a Bluetooth Low Energy radio positioning, (iv) a low-power wide-area network (LPWAN) based positioning.

As an example embodiment, wherein said reference position associated with the mobile device is obtained in response to transmitting a request to location service.

As an example embodiment, said mobile device comprises an operating system providing a mock location detection functionality, wherein said determining whether the GNSS related position is expected or unexpected for a position of the mobile device, is further based at least partially on a result obtained from the mock location detection functionality.

As an example embodiment, the GNSS related position is determined to be unexpected: (i) if said one or more GNSS related update parameter are at least partially inconsistent with the GNSS related position; and/or (ii) if a comparison between the reference position and the GNSS related position indicates an unexpected GNSS related position; and/or (iii) if said result obtained from the mock location detection functionality indicates that the GNSS related position is considered to be unexpected (e.g. the result obtained from the mock location detection functionality indicates mock position (e.g. mock location)).

As an example embodiment, the operating system is based on Android or is an Android operating system, the method comprising at least one of: obtaining the result from the mock location detection functionality by using the "isMockLocationEnable" application interface if the operating system application interface level is less than 18; and obtaining the result from the mock location detection functionality by using the "isFromMockLocation" application interface if the operating system application interface level is equal to or higher than 18.

As an example embodiment, the aspect of the invention is performed at least partially (or completely) by a client of the mobile device.

As an example embodiment, wherein said client is configured to provide an information being indicative of the result whether the GNSS related position is expected or unexpected for a position of the mobile device to at least one application or an other client of the mobile device.

As an example embodiment, the aspect of the invention comprises providing the reference position from the client to at least one application or an other client of the mobile device if said GNSS related position is determined to be unexpected.

As an example embodiment, the aspect of the invention comprises determining the reference position by the mobile device.

As an example embodiment, said determining whether at least one unexpected radio signal parameter of a radio communication system used for positioning is obtained and/or at least one unexpected radio signal of a radio communication system used for positioning is received at the respective mobile device is performed based on at least one of: (i) sensor information indicating a movement of the respective mobile device from a first position to a second position; (ii) a comparison between a radio map and at least radio signal parameter received by the respective mobile device.

It is to be understood that the presentation of the invention in this section is merely by way of examples and non-limiting.

Other features of the invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: is a schematic block diagram of an example embodiment of an apparatus according to the invention;
- Fig. 2a: is a flow chart illustrating an example embodiment of a method 200 according to the invention (which may represent an example operation in the apparatus of Figure 1);
- Fig. 3a: is a flow chart illustrating an exemplary embodiment of a method 300 according to the invention;
- Fig. 3b: is a flow chart illustrating an exemplary embodiment of a method 300' according to the invention;
- Fig. 4: is a block diagram of an exemplary embodiment of a mobile device according to the invention;
- Fig. 5: is an example of a schematic scheme illustrating an exemplary embodiment according to the invention; and
- Fig. 6: is a schematic illustration of examples of tangible and non-transitory storage media according to the invention.

### DETAILED DESCRIPTION OF THE FIGURES

The following description serves to deepen the understanding of the present invention and shall be understood to complement and be read together with the description of example embodiments of the invention as provided in the above SUMMARY section of this specification.

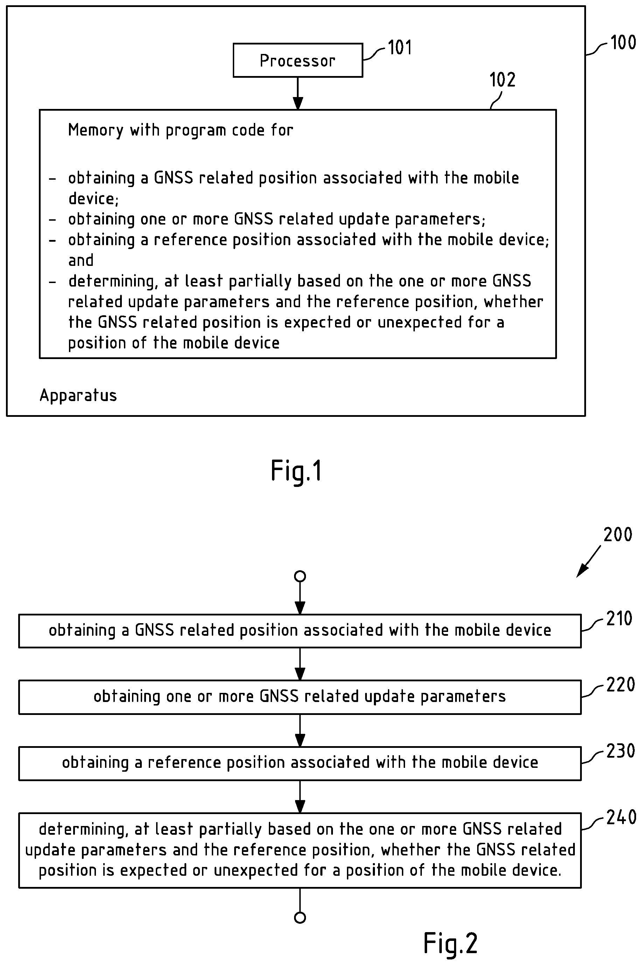

Figure 1 is a schematic block diagram of an example embodiment of an apparatus according to the invention. Apparatus 100 comprises a processor 101 and, linked to processor 101, a memory 102. Processor 101 is configured to execute computer program code stored in memory 102 in order to cause an apparatus to perform desired actions. Memory 102 is thus an example embodiment of a non-transitory computer readable storage medium, in which computer program code according to the invention is stored. For instance, memory 102 may store computer program code for obtaining a GNSS related position associated with the apparatus 100 (which may represent a mobile device); obtaining one or more GNSS related update parameters; obtaining a reference position associated with the mobile device; and determining, at least partially based on the one or more GNSS related update parameters and the reference position, whether the GNSS related position is expected or unexpected for a position of the mobile device.

Apparatus 100 could be a mobile device or component or of a mobile device. For instance, the mobile device may be one of a smartphone, a tablet computer, a notebook computer, a smart glass, a smart watch and a smart band, a mobile device being installed in a car (e.g. for navigation purpose) or any other well-suited mobile device.

Apparatus 100 could equally be a component, like a chip, circuitry on a chip or a plug-in board, for any mobile device. Optionally, apparatus 100 could comprise various other components, like a data interface configured to enable an exchange of data with separate devices, a user interface like a touchscreen, a further memory, a further processor, etc.

An operation of the apparatus 100 will now be described with reference to the flow chart 200' of Figure 2a. The operation is an example embodiment of a method according to the invention. At least one processor 101 (may be one processor 101 or a plurality of processors 101) and the program code stored in at least one memory 102 (may be one memory 102 or a plurality of memories 102) cause the apparatus 100 to perform the operation when the program code is retrieved from memory 102 and executed by processor 101.

The apparatus 100 obtains a GNSS related position associated with the apparatus 100 (which may represent a mobile device) (action 210 of method 200).

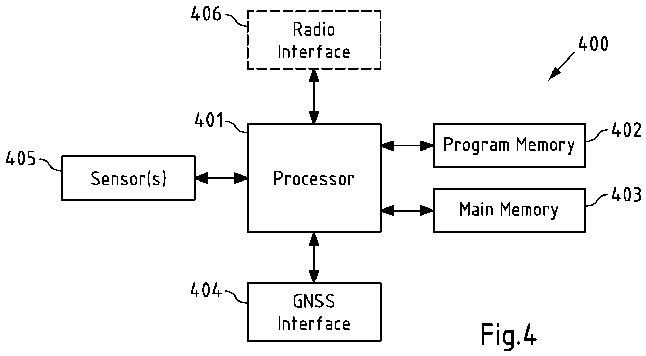

For instance, apparatus 100 may comprise an GNSS interface which may comprise any kind of global navigation satellite signal receiver, for example a GPS receiver and/or a GLONASS receiver and/or a GALILEO receiver. The GNSS interface may be configured to receive corresponding satellite signals and to determine the current position of mobile survey device 310 based on the signals, e.g. possibly using provided assistance data, or to provide the signals (or at least a part of the signals) to an application of apparatus 100 such that the application determines the current position based on the provided signals. As an example, this application may be denoted as GNSS location application, wherein the GNSS location application may be considered to be part of a platform location manager of an operating system of the apparatus 100. For instance, the GNSS related position associated with apparatus 100 obtained by action 210 might be the current position of apparatus 100 determined by the GNSS interface or the current position determined by the GNSS application of apparatus 100. GNSS related position may be understood in a way that the GNSS related position is not determined based on a non-GNSS positioning system, e.g. a radio network based positioning system like a WiFi-based positioning system using fingerprints of access points (e.g. beacons) and a radio map to estimate the position of a mobile device (e.g. as explained with respect to optional radio interface 406 of mobile device 400 of Fig. 4).

The apparatus 100 obtains one or more GNSS related update parameters (action 220 of method 200). As an example, said one or more GNSS related update parameter may be obtained from the GNSS interface of the apparatus and/or from a GNSS application (e.g. not the GNSS location application) being connected with the GNSS interface, wherein the GNSS application may comprise a GNSS engine.

For instance, said one or more GNSS related update parameters comprise at least one of: (i) at least one GNSS engine status update parameter; (ii) at least one GNSS satellite measurement update data. As an example, said at least one GNSS satellite measurement update data comprise raw data and/or computed information.

The apparatus 100 obtains a reference position associated with the apparatus (which might be a mobile device) (action 230 of method 200). For instance, said reference position may be considered to represent a trusted position (or trusted location).

As an example, said reference position associated with the apparatus 100 is obtained by apparatus 100 based at least partially on a non-GNSS positioning or is obtained from a specific GNSS provider, in particular a customized GNSS provider.

For instance, said apparatus 100 may be configured to determine the reference position based on the non-GNSS positioning. E.g., the non-GNSS positioning may be at least one of: (i) a radio-network based positioning, (ii) a sensor-based positioning.

And/or, for instance, the apparatus 100 may obtain the reference position from the specific GNSS provider by using a location client of this GNSS provider in the apparatus 100, wherein this location client may be different from the GNSS location application. As an example, this location client might be provided by a trusted GNSS provider and, for instance, this location client might be connected to the GNSS interface and/or the GNSS application in order to receive data for estimating the reference position.

The apparatus 100 determines, at least partially based on the one or more GNSS related update parameters and the reference position, whether the GNSS related position is expected or unexpected for a position of the mobile device (action 240 of method 200).

For instance, said GNSS related position may be considered to be potentially manipulated if it is determined that said GNSS related position is unexpected for a position of the mobile device. E.g., the GNSS related position may be considered to be unexpected if the GNSS related position deviates from a correct position (e.g. the reference position) of the respective mobile device more than a predefined threshold, but also other criteria may be used, e.g. if the estimated position of the respective mobile device is not within an coverage area being associated with one or more parameters of the obtained one or more GNSS update parameters.

As an example, if said GNSS related position is obtained from GNSS location application which is manipulated, e.g. a spoofed GNSS location application, this GNSS related position may be incorrect and may not correspond to the real location of the apparatus 100 and thus may be considered to be unexpected, wherein it can be determined at least partially based on the one or more GNSS related update parameters and the reference position, whether the GNSS related position is expected or unexpected for a position of the mobile device (action 240 of method 200).

As an example, the GNSS related position may be determined to be unexpected (in action 240) if said one or more GNSS related update parameters are at least partially inconsistent with the GNSS related position; and/or if a comparison between the reference position and the GNSS related position indicates an unexpected GNSS related position. And/or, as an example, the GNSS related position may be determined to be expected (in action 240) if said one or more GNSS related update parameters are consistent with the GNSS related position; and/or (e.g. and) if a comparison between the reference position and the GNSS related position indicates an expected GNSS related position.

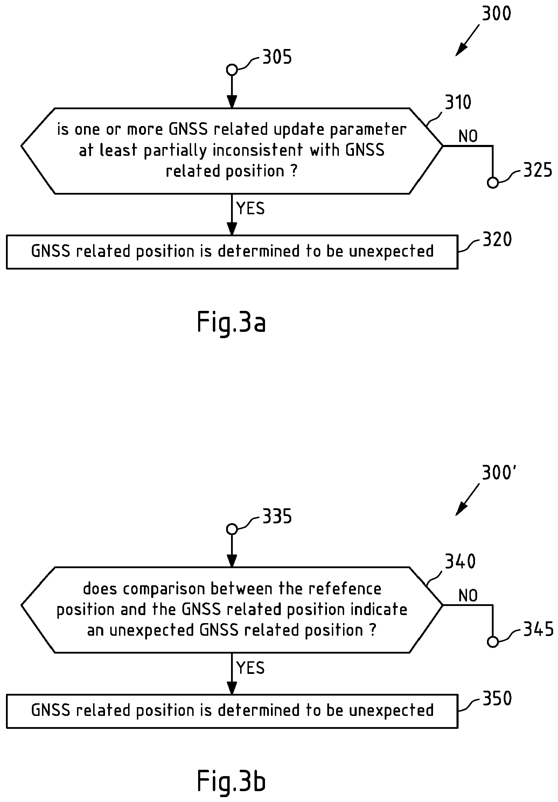

Fig. 3a is a flow chart 300 illustrating an exemplary embodiment of a method 300 according to the invention. Without limiting the scope of the invention, it is assumed in the following that the apparatus 100 as described above with respect to Fig. 1 performs the steps of flow chart 300. For instance, method 300 may be considered to be part of action 240 of method 200.

Method 300 comprises checking if said one or more GNSS related update parameters are at least partially inconsistent with the GNSS related position (action 310). If yes, method 300 determines that the GNSS related position is determined to be unexpected (action 320). If not, method 300 proceeds at reference sign 325 and, as an example, it may then be determined that the GNSS related position is determined to be expected, or, as another example, if method 300' has not been performed before, method 300 may jump from reference sign 325 to reference sign 335 of method 300'.

For instance, action 310 may comprise determining whether said one or more GNSS related update parameters are at least partially inconsistent with the GNSS related position.

As an example, said one or more GNSS related update parameters comprise at least one of: (i) at least one GNSS engine status update parameter; (ii) at least one GNSS satellite measurement update data. For instance, said at least one GNSS satellite measurement update data comprises raw data and/or computed information.

For instance, said one or more GNSS related update parameters may comprise at least one GNSS satellite measurement update data if the operating system of the apparatus 100 is Android with an application interface (API) level >24, but any other operating system providing GNSS satellite measurement update may be also be used by apparatus 100.

As an example embodiment, method 200 comprises tracking said one or more GNSS related update parameters, wherein said determining whether said one or more GNSS related update parameters are at least partially inconsistent with the GNSS related position (action 310) comprises analyzing a history of platform GNSS engine status update parameter(s) and/or GNSS satellite measurement update data.

Fig. 3b is a flow chart 300' illustrating an exemplary embodiment of a method 300' according to the invention. Without limiting the scope of the invention, it is assumed in the following that the apparatus 100 as described above with respect to Fig. 1 performs the steps of flow chart 300'. For instance, method 300' may be considered to be part of action 240 of method 200. Furthermore, method 300' may be considered to be together with method 300 as part of action 240 or may be considered to be without method 300 as part of action 240.

Method 300' comprises checking whether a comparison between the reference position and the GNSS related position indicates an unexpected GNSS related position (action 340). For instance, action 340 may comprise performing this comparison between the reference position and the GNSS related position.

If yes, method 300' determines that the GNSS related position is determined to be unexpected (action 350). If not, method 300' proceeds at reference sign 345 and, as an example, it may then be determined that the GNSS related position is determined to be expected, or, as another example, if method 300 has not been performed before, method 300' may jump from reference sign 345 to reference sign 305 of method 300.

For instance, said comparison between the reference position and the GNSS related position comprises determining a representative of a distance between the reference positon and the GNSS related position, and, action 340 of method 300' comprises checking whether the distance indicated by the representative of a distance between the reference positon and the GNSS related position is above a threshold. If the distance is above the threshold, method 300' proceeds with action 350 and determines that the GNSS related position is unexpected. If the distance is below or equal to the threshold, method 300' proceeds at reference sign 345 and it may be determined that the GNSS related position is expected, or, alternatively, it may be further checked whether the said one ore more GNSS related updated parameters are at least partially consistent with the GNSS related position (e.g. by means of method 300), and only if this further checking yields a positive result, it may be determined in action 240 that the GNSS related position is expected, otherwise (i.e., in a case this further checking yields a negative result based on actions 310 and 320), it may be determined in action 240 that GNSS related position is unexpected. As an example, said threshold may be 1m, or 2m, or 3m, or 5m, or 10m, or 50m, or any other well-suited threshold.

As an example embodiment, said reference position associated with the mobile device is obtained (by apparatus 100) based at least partially on a non-GNSS positioning or is obtained (by apparatus 100) from a specific GNSS provider, in particular a customized GNSS provider.

As an example, method 200 may comprise tracking the reference position, e.g. from the specific GNSS provider (which might be trusted GNSS provider), such that an actual reference position is available when performing action 340 of method 300', and/or method 200 may comprise transmitting a request to location service and obtained the reference position associated with the mobile device in response to transmitting the request to a location service from the location service.

For instance, said non-GNSS positioning is at least one of: (i) a radio-network based positioning, and (ii) a sensor-based positioning. As an example, apparatus 100 may be configured to determine the reference position.

If the non-GNSS positioning is a radio-network based positioning, apparatus 100 may be enabled for support such a non-GNSS based radio positioning system. This may be understood to mean that the apparatus 100 is configured to estimate (e.g. determine) or to cause estimating (e.g. determining) its position at least partially based on radio signal parameters of one or more radio signals (e.g. one or more terrestrial radio signals) obtained at this position (e.g. obtained as a scanning result of scanning for observable radio signals at this position). Estimating (e.g. determining) of a position of the apparatus 100 at least partially based on (a) radio signal parameter(s) may be understood to mean that the estimating is performed as a function of the radio signal parameter(s). It is however to be understood that the estimating may optionally depend on further information like a radio map. For example, such a radio map may be configured to enable apparatus 100 to estimate its position at least partially based on this radio map when the apparatus 100 is located in the area covered by the radio map. For example, the radio map is represented by radio map information which may be provided (e.g. transmitted) by a positioning server to the apparatus 100 and/or which may be hold available by the apparatus 100 (e.g. stored in memory means of the mobile device 2-1, 2-2, 2-3(s)). Further exemplary details of this radio-network based positioning performed by apparatus 100 will be explained with respect to mobile device 400 depicted in Fig. 4, in particular with respect to optional radio interface 406 of mobile device 400.

For instance, said radio-network based positioning is one of: (i) a cellular-based positioning, in particular, a cellular-phone-system-based positioning; (ii) a WLAN-based positioning; (iii) a Bluetooth-based positioning, in particular a Bluetooth Low Energy radio positioning, and (iv) a low-power wide-area network (LPWAN) based positioning.

And/or, as an example, sensor information indicating a movement of the apparatus 100 may be used to determined the reference position of the apparatus 100. E.g. such a sensor information indicating a movement of apparatus 100 may be any information (e.g. qualitatively or quantitatively) representing an event or change in the environment of the apparatus 100 detected by a sensor that is indicative (e.g. characteristic) for a movement of the apparatus 1003. An event or change in the environment of the mobile device apparatus 100 may for example be an event associated with or a change of a physical quantity (e.g. acceleration, orientation, shock, speed, etc.) that is characteristic for a movement of the apparatus 100. For instance, apparatus 100 may be configured to obtain sensor information indicating a movement of the apparatus 100, wherein obtaining the sensor information may be understood to mean at least one of receiving the sensor information (e.g. from a remote device like a sensor device, an activity tracker or a smartwatch) and determining the sensor information (e.g. by detecting an event or change in the environment of the sensor information indicating a movement of the apparatus 100 by a sensor of the sensor information indicating a movement of the apparatus 100).

For instance, said reference position may be determined based on a former reference position (which may be obtained based on said radio-network based positioning or obtained from a specific GNSS provider by the apparatus 100 at a first position, wherein apparatus 100 uses the obtained sensor information indicating a movement of the apparatus 100 to track the actual position (i.e., the reference positon used in cation 340) by estimating the position based on the former reference position and the movement of the apparatus 100 indicated by the obtained sensor information.

As an example, said sensor-based positioning is based on sensor information determined from at least one of the following sensors: an inertial or motion sensor; a shock sensor, a magnetometer, and an optical sensor.

As an example embodiment of apparatus 100, the apparatus 100 comprises an operating system providing a mock location detection functionality, wherein said determining whether the GNSS related position is expected or unexpected for a position of the mobile device (action 240) is further based at least partially on a result obtained from the mock location detection functionality.

For instance, the operating system of apparatus 100 may be based on Android or may be an Android operating system, and if the operating system application interface level is less than 18 the method 200 comprises obtaining the result from the mock location detection functionality by using the "isMockLocationEnable" application interface, and if the operating system application interface level is equal to or higher than 18 method 200 comprises obtaining the result from the mock location detection functionality by using the "isFromMockLocation" application interface. Then, in action 240 it may be checked whether this result indicates a mock location, and if yes, the GNSS related position is determined to be unexpected, and if not, this result whether the GNSS related position is determined to be unexpected or to be expected depends on the one or more GNSS related updated parameter (e.g. as explained with respect to method 300) and/or depends on the reference position (e.g. as explained with respect to method 300').

As an example embodiment, method 200 may be performed by a client of the apparatus 100. Furthermore, for instance, method 300 and/or method 300' may be performed by a client of the apparatus 100, e.g. by the same client performing method 200. Furthermore, this client may perform any examples and embodiments explained with respect to method 200 and/or method 300 and or method 300'.

For instance, said client is configured to provide an information being indicative of the result whether the GNSS related position is expected or unexpected for a position of the apparatus 100 to at least one application or an other client of the apparatus, i.e. a result of action 240.

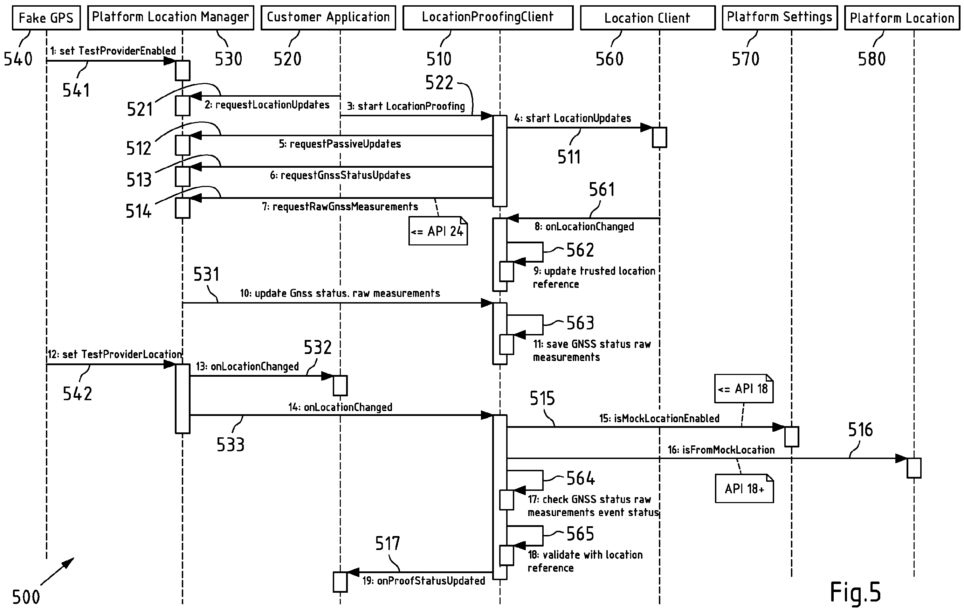

As an example, said client may be requested by an other client or at least one application of the apparatus 100 to provide a result whether the GNSS related position is expected or unexpected for a position of the mobile device (e.g. indicated by exemplary request 522 in Fig. 5), and in response to receiving such a request from another client or another application the client may perform action 200 (and/or method 300 and/ or method 300') or action 240 (e.g. including method 300 and/or method 300') in order to determine, at least partially based on the one or more GNSS related update parameters and the reference position, whether the GNSS related position is expected or unexpected for a position of the apparatus 100 (action 240).

And/or, as an example, the client may be configured to provide the reference position from the client to at least one application or an other client of the apparatus 100 if said GNSS related position is determined to be unexpected. Thus, if it is determined in action 240 that the GNSS related position is determined to be unexpected, e.g. in response to the above mentioned request by an other client or an other application of the apparatus 100 can provide a result whether the GNSS related position is expected or unexpected for a position of the apparatus 100 (e.g. the result of action 240). Furthermore, for instance, if the GNSS related position is determined to be unexpected for a position of the apparatus 100 the client may provide the reference position to the other client or at least one application such that the other client or the at least one application may use the reference position instead of the GNSS related position (which is considered to be unexpected).

Fig. 4 is a block diagram of an exemplary embodiment of mobile device 400 according to the invention. In the following, it is assumed that apparatus 100 may correspond to this mobile device 40 without any limitations.

Mobile device 400 comprises a processor 401. Processor 401 may represent a single processor or two or more processors, which are for instance at least partially coupled, for instance via a bus. Processor 401executes a computer program code stored in program memory 402 (e.g. computer program code causing mobile device 400 to perform any one embodiment of the disclosed method (e.g. the steps of any one embodiment of the disclosed method) or a part thereof (e.g. at least some steps of any one embodiment of the disclosed method) (in particular method 200 and/or method 300 and/or method 300' as described with respect to of Figs. 2a, 3a and 3b), when executed on processor 401), and interfaces with a main memory 403. Program memory 402 may also contain an operating system for processor 401, wherein, for instance, this operating system may be an iOS operating system or an Android operating system or an Android based operating system or any other well-suited operating system. Furthermore, as an example embodiment (e.g. if mobile device 400 is configured to perform non-GNSS positioning including radio-network based positioning), radio map information representing a radio map in an environment of the radio-network system may be used for radio-network based positioning and may be stored e.g. in main memory 403 or in program memory 402. Some or all of memories 402 and 403 may also be included into processor 401. One of or both of memories 402 and 403 may be fixedly connected to processor 401 or at least partially removable from processor 401, for example in the form of a memory card or stick.

A program memory (e.g. program memory 402) may for example be a non-volatile memory. It may for instance be a FLASH memory (or a part thereof), any of a ROM, PROM, EPROM, MRAM or a FeRAM (or a part thereof) or a hard disc (or a part thereof), to name but a few examples. For example, a program memory may for instance comprise a first memory section that is fixedly installed, and a second memory section that is removable, for instance in the form of a removable SD memory card.

A main memory (e.g. main memory 403) may for example be a volatile memory. It may for example be a DRAM memory, to give non-limiting example. It may for instance be used as a working memory for a processor (e.g. processor 401) when executing an operating system and/or programs.

Mobile device 400 comprises a GNSS interface 404. Processor 401 controls the GNSS (Global Navigation Satellite System) interface 404 which may comprise any kind of global navigation satellite signal receiver (e.g. a GNSS sensor), e.g. a GPS and/or a Galileo and/or a GLONASS signal receiver (e.g. GPS and/or a Galileo and/or a GLONASS signal sensor) or any other well-suited satellite signal receiver (e.g. satellite signal sensor) which can be used for GNSS positioning. The GNSS interface may be configured to receive corresponding satellite signals and to determine the current position of apparatus 400 based on the signals, e.g. possibly using provided assistance data, or to provide the signals (or at least a part of the signals) to an application of apparatus 400 (wherein the application may be performed by processor 401) such that the application determines the current position based on the provided signals. As an example, this application may be denoted as GNSS location application. For instance, GNSS interface 404 can be used in order determine the GNSS related position associated with mobile device 400 obtained by action 210 of method 200 which can be assumed to be the current position of mobile device 400 determined by the GNSS interface 404 or the current position determined by the GNSS application of mobile device 400 100. GNSS related position may be understood in a way that the GNSS related position is not determined based on a non-GNSS positioning system, e.g. a radio network based positioning system like a WiFi-based positioning system using fingerprints of access points and a radio maps to estimated the position of a mobile device.

Moreover, as an example, mobile device 400 may comprise one or more optional sensors 405, and the processor 401 controls the one or more sensors 405 configured for determining sensor information indicating a movement of mobile device 400. The determined sensor information may be provided to processor 401. Therein, sensor information indicating a movement of the mobile device may be any information (e.g. qualitatively or quantitatively) representing an event or change in the environment of mobile device 400 detected by a sensor that is indicative (e.g. characteristic) for a movement of mobile device 400. An event or change in the environment of mobile device 400 may for example be an event associated with or a change of a physical quantity (e.g. acceleration, orientation, shock, speed, etc.) that is characteristic for a movement of mobile device 400.

Examples of optional sensor(s) 405 are an inertial or motion sensor (e.g. a speed sensor, an acceleration sensor, a shock sensor, an activity or step sensor, an orientation sensor like a compass or a gyroscope), an optical sensor (e.g. a camera), or a combination thereof.

As an example embodiment, mobile device 400 may comprise a radio interface 406. Processor 401 may control this optional radio interface 406 which is configured for receiving and, optionally, transmitting radio signals. A radio interface may be or may comprise a radio receiver circuit and/or a radio transmitter circuit and/or a radio transceiver circuit. Such circuits may comprise modulators, filters, mixers, switches and/or one or more antennas to allow transmission and/or reception of radio signals.

As an example embodiment, e.g. if mobile device 400 is configured to perform non-GNSS positioning including radio-network based positioning, the optional radio interface may comprise at least one of (i) a cellular radio transceiver which is configured to communicate via a cellular radio network (e.g. to transmit and receive cellular radio signals), (ii) a WLAN transceiver which is configured to communicate via a WLAN network (e.g. according to one of the IEEE 802.11 standards or any other WiFi/WLAN standard), (iii) a Bluetooth transceiver (which might be a Bluetooth Lower Energy (BLE) transceiver), (iv) a low-power wide-area transceiver configured to communication via a low-power wide-area network (LPWAN).

For example, the cellular radio transceiver may be or may comprise a 2G/3G/4G/5G radio transceiver.

As an example embodiment, mobile device 400 is configured to perform non-GNSS positioning including radio-network based positioning by using the radio interface 406 for a radio positioning system. Thus, mobile device 401 may be enabled for or support such a non-GNSS based radio positioning system. This may be understood to mean that the mobile device 400 is configured to estimate (e.g. determine) or to cause estimating (e.g. determining) its position at least partially based on radio signal parameters of one or more radio signals (e.g. one or more terrestrial radio signals) obtained at this position (e.g. obtained as a scanning result of scanning for observable radio signals at this position). Estimating (e.g. determining) of a position of the mobile device 400 at least partially based on (a) radio signal parameter(s) may be understood to mean that the estimating is performed as a function of the radio signal parameter(s). It is however to be understood that the estimating may optionally depend on further information like a radio map, which may be stored in main memory 403 or main memory 402. For example, such a radio map may be configured to enable mobile device 400 to estimate their position at least partially based on this radio map when the mobile device 400 is located in the area covered by the radio map. For example, the radio map is represented by radio map information which may be provided (e.g. transmitted) by a positioning server to the mobile device 400 and/or which may be hold available by the mobile device 400 (e.g. stored in memory means 402 or 404 of the mobile device 400). For example, the radio map contains or represents a respective radio model for a plurality of radio devices transmitting (e.g. broadcasting) radio signals that are observable within the area covered by the radio map. If the radio map covers a building, the radio map may contain or represent, for each floor of the building, a respective radio model for a plurality of radio devices transmitting (e.g. broadcasting) radio signals that are observable on the respective floor of the building.

A respective radio model for a respective radio device of the plurality of radio devices may be understood to represent at least the expected radio coverage of the respective radio device (e.g. on a certain floor of a building). For example, the radio model of such a radio device may describe the coverage area (e.g. on a certain floor of a building) within which radio signals transmitted or triggered to be transmitted by this radio device are expected to be observable. An example for such a radio model is a radio image representing an expected radio signal strength field of the radio signals transmitted or triggered to be transmitted by this radio device. The real radio coverage of such a radio positioning support device may however deviate from the expected radio coverage as described by such a radio model. As disclosed above, the radio map may be determined at the positioning server during a training stage of the non-GNSS based radio positioning system. Causing of estimating (e.g. determining) of a position of a mobile device 400 at least partially based on the radio signal parameter(s) may be understood to mean that the radio signal parameter(s) are provided (e.g. transmitted) by the mobile device 400 to a positioning server to cause the positioning server to estimate (e.g. determine) a position of the mobile device 400 at least partially based on the radio signal parameter(s) and wherein the mobile device 400 received the estimated position from the positioning server.

The one or more radio signals may be terrestrial radio signals. Examples of such a terrestrial radio signal are a Bluetooth signal, a Bluetooth Low Energy (BLE) signal, a cellular network signal, an low-power wide-area network (LPWAN) signal or a Wireless Local Area Network (WLAN) signal. The Bluetooth standards are specified by the Bluetooth Special Interest Group and are presently available under https://www.bluetooth.com/. A cellular network may for example be mobile phone network like a 2G/3G/4G/5G cellular communication network. The 2G/3G/4G/5G cellular radio communication standards are developed by the 3GPP and presently available under http://www.3gpp.org/. Examples of LPWAN specifications are the LoRaWAN specification developed by the LoRa Alliance and presently available under https://lora-alliance.org/ as well as the Narrowband IoT (NB-IoT) specification developed by 3GPP and presently available under http://www.3gpp.org/. WLAN is for example specified by the standards of the IEEE 802.11 family (http://www.ieee.org/).

A radio signal parameter of a certain radio signal may for example be obtained by the mobile 400 as a scanning result when scanning for observable radio signals at a certain position (e.g. for estimating its position). Therein, a radio signal may be understood to be observable at a certain position if the radio signal is receivable with a minimum quality (e.g. a minimum signal-to-noise ratio and/or a minimum signal power, e.g. at least -90 dbm or -95 dbm) at this position. For example, the mobile device 400 may determine at least one respective radio signal parameter for each radio signal observed when scanning for radio signals at a certain position.

A radio signal parameter of a certain radio signal may be understood to be at least one of (1) an information (e.g. an identifier) contained in the radio signal and (2) a representation (e.g. an indicator or a value) of a physical quantity (e.g. a received signal strengths) of the radio signal. Accordingly, a radio signal parameter may be determined by at least one of (1) extracting information contained in the radio signal and (2) measuring a physical quantity (e.g. a received signal strength) of the radio signal.

For example, the mobile device 2-1, 2-2, 2-3 may scan for observable radio signals at a position for estimating its position (e.g. based on a non-GNSS based radio positioning system as disclosed above).

In the following, it is assumed for exemplary purposes that optional radio interface 406 comprises a BLE transceiver configured to transmit and receive BLE radio signals in line with any current or future version of the Bluetooth standard supporting a low energy mode. Radio interface 406 enables mobile device 400 to scan for observable BLE radio signals transmitted (e.g. broadcasted) by BLE of a BLE radio-network system. Therein, a BLE radio signal may be understood to be observable if the BLE radio signal is receivable with a minimum quality (e.g. a minimum signal-to-noise ratio and/or a minimum signal power, e.g. at least -90 dBm or -95 dBm). Moreover, the BLE transceiver is configured, alone or together with processor 401, to determine one or more radio signal parameters of BLE radio signals observed (e.g. received) when scanning for observable radio signals. To this end, the BLE transceiver may for example extract, from each observed BLE radio signal, the respective UUID contained therein and measure the respective received signal strength of each observed BLE radio signal. The extracted UUIDs and the received signal strength values may then for example be provided to processor 401 as scanning results. It is to be understood that any computer program code required for receiving and processing received BLE radio signals may be stored in an own memory of the radio interface 406 and executed by an own processor of the radio interface 406 or it may be stored for example in memory 403 and executed for example by processor 401.

Furthermore, as an example embodiment, mobile device 400 may use optional radio interface 806 to communicate with positioning server (e.g. via the internet). For example, mobile device 400 may use radio interface 805 to transmit radio fingerprint observation reports to a positioning server 3 and/or receive radio map information from a positioning server and/or to transmit the radio signal parameter(s) to a positioning server to cause the positioning server to estimate (e.g. determine) a position of the mobile device 400 at least partially based on the radio signal parameter(s) and to receive the estimated position from the positioning server.

The components 402 to 406 of mobile device 400 may for instance be connected with processor 401 by means of one or more serial and/or parallel busses.

It is to be understood that mobile device 400 may comprise various other components like a user interface for receiving user input.

For instance, mobile device 400 may be an Internet-of-Thing (IoT) device, a smart home device, a smartphone, a tablet computer, a notebook computer, a smart watch, and a smart band or any other well-suited mobile device. As an example, mobile device 400 may represent apparatus 100.

Fig. 5 depicts an example embodiment according to the invention being implemented in apparatus 100 or mobile device 400 (in the sequel it will be referred without any limitation to apparatus 100) presented by a scheme 500.

A location proofing client 510 is running on the apparatus 100. For instance, this location proofing client may be considered to represent the above-mentioned client which is configured to perform at least some parts (or all parts) of method 200, and, as an example, to perform at least some parts of (or all parts of) method 300 and/or method 300'.

Furthermore, a customer application 520 is running on the apparatus 100. For instance, the customer application 520 requests a GNSS related positon (e.g. a GNSS location) from a platform location manager 530 of the apparatus 100 by transmitting a request 521 to the platform location manager 530. The platform location manager 530 may comprise the above-mentioned GNSS location application and may comprise a platform API. A fake GPS application 530 is installed in mobile device 530 and my enable lock location provider of the platform location manager 530 by signaling 521 to the platform location manager 530.

For instance, customer applicant 520 may start the location proofing client 510 e.g. by transmitting a startlocationproofing signal 522 to the location proofing client 510. E.g., in response to receiving this startlocation proofing signal 552 the location proofing client 510 may start method 200. Then, as an example, the location proofing client 510 may request location update(s) from a location client 560, e.g. by signaling 511, wherein this location client 560 may be the location client explained with respect to method 200 and wherein this location client might be assumed to be provided by a trusted provider. In response to receiving the request for location update(s) 511 the location proofing client 510 provides a reference position (e.g. e reference location) to the location proofing client 510, e.g. as indicated by signaling 561. Thus, the location proofing client 510 obtains a reference position associated with apparatus 100 (action 230 of method 200) by receiving the reference position from the location client 560. For instance, in action 230 of method 200 the location proofing client 510 may obtain a (new) reference position if the location client 560 provides an update of the reference position (e.g. if the apparatus 100 has moved compared to the last provided reference position). Thus, signaling 561 for providing a reference position from the location client 560 to the location proofing client 510 may be performed one or more times, e.g. trigger if there is a new updated reference position to be provided. Then for instance, as indicated by reference sign 562, the received reference position may be stored by the location proofing client as updated trusted reference position. Thus, for instance, action 230 may ensure that an updated reference position is obtained from the location client 560. For instance, action 230 may comprise periodically obtaining a reference position from the location client 560. As an example, the above explained examples of determining the reference position (e.g. with respect to determining the reference position obtained in action 230 of method 200) may be performed by the location client 560.

Furthermore, as an example, the location proofing client 510 may start to (e.g. passively) listen GNSS related positions from the platform location manager 530 (e.g. the GNSS application) by transmitting a request 512 for GNSS related positions (e.g. a request for GNSS position updates) to the platform location manager 530.

Furthermore, as an example, the location proofing client 510 may start to request platform GNSS engine status updates from the platform location manager 530 (e.g. the GNSS application) by transmitting request 513 for GNSS engine status updates to the platform location manager 530. In response the transmitting request 513 the location proofing client 510 may obtain (e.g. receive) at least one GNSS engine status update parameter from the platform location manager 530 (e.g. as part of action 220 of method 200 when obtaining one or more GNSS related update parameters, wherein the at least one GNSS engine status update parameter is part of this obtained one or more GNSS related parameters) as indicated by reference sign 531 in scheme 500, wherein the at least one GNSS engine status update parameter may be obtained (e.g. received) any time the platform location manager 530 provides an update of the at least one GNSS engine status update parameter. E.g. the at least one GNSS engine status update parameter may be obtained (e.g. received) periodically from the platform location manager 530. For instance, if an at least one GNSS engine status update parameter is obtained from the platform location manager (reference sign 531) this at least one GNSS engine status update parameter may be stored by the location proofing client as indicated by reference sign 563. For instance, a history of at least one or each obtained at least one GNSS engine status update parameter received from the platform location manager 530 may be stored at 563.

Furthermore, as an example, the location proofing client 510 may start to request GNSS satellite measurement update data from the platform location manager 530 (e.g. the GNSS application) by transmitting request 514 for GNSS satellite measurement update data to the platform location manager 530, wherein, for instance, this request 514 may be transmitted if the operating system is Android or Android based and the application interface (API) level of the operating system of the apparatus 100 (e.g. the API level of the platform location manager 530) is equal to 24 or higher than 24. In response the transmitting request 543 the location proofing client 510 may obtain (e.g. receive) at least one GNSS satellite measurement update data from the platform location manager 530 (e.g. as part of action 220 of method 200 when obtaining one or more GNSS related update parameters, wherein the at least one GNSS satellite measurement update data is part of this obtained one or more GNSS related parameters) as indicated by reference sign 531 in scheme 500, wherein the at least one GNSS satellite measurement update data may be obtained (e.g. received) any time the platform location manager 530 provides an update of the at least one GNSS satellite measurement update data. E.g. the at least one GNSS satellite measurement update data may be obtained (e.g. received) periodically from the platform location manager 530. For instance, if at least one GNSS satellite measurement update data is obtained from the platform location manager (reference sign 531) this at least one GNSS satellite measurement update data may be stored by the location proofing client as indicated by reference sign 563. For instance, a history of at least one or each obtained at least one GNSS satellite measurement update data received from the platform location manager 530 may be stored at 563.

For instance, the fake GPS application 540 may set a fake GNSS position (e.g. location) at the platform location manager, e.g. as indicated by signaling 542, wherein, as an example, this fake GNSS position may be set through platform "setTestProviderLocation()" API provided by the platform location manager. Then, as an example, the customer application may receive this fake GNSS related position (i.e., the fake GNSS position) as indicated by reference sign 532 in scheme 500. Furthermore, the location proofing client 510 also receives this fake GNSS related position (i.e., the fake GNSS position) as indicated by reference sign 532 in scheme 500, wherein receiving this GNSS related position by the location proofing client 510 may be considered to be part of action 210 of method 200, i.e., may represent obtaining a GNSS related position associated with the apparatus 100.

The location proofing client 510 determines, at least partially based on the one or more GNSS related update parameters (e.g. based on the received at least one GNSS engine status update parameter which may include historic at least one GNSS engine status update parameters and/or based on the received at least one GNSS satellite measurement update data which may include historic at least one GNSS satellite measurement update data) (Fig. 5: reference sign 564) and on the reference position (Fig. 5: reference sign 565), wherein the GNSS related position (e.g. received by signaling 533) is expected or unexpected for a position of the mobile device (action 240 of method 200). For instance, this action 240 may be performed as explained before, e.g. by method 300 and/or method 300'.

As an example embodiment of apparatus 100, the apparatus 100 comprises an operating system providing a mock location detection functionality, wherein said determining whether the GNSS related position is expected or unexpected for a position of the mobile device (action 240) may be further based at least partially on a result obtained from the mock location detection functionality.

For instance, the operating system of apparatus 100 may be based on Android or may be an Android operating system, and if the operating system application interface level is less than 18 the location proofing client 510 may transmit a request 515 (e.g. to platform settings 570) in order to obtain the result from the mock location detection functionality by using the "isMockLocationEnable" application interface (reference sign 515), and if the operating system application interface level is equal to or higher than 18 the location proofing client 510 may transmit a request 516 (e.g. to platform location 580) in order to obtain the result from the mock location detection functionality by using the "isFromMockLocation" application interface (reference sign 516) . Then, in action 240 it may be checked whether this result indicates a mock location, and if yes, the GNSS related position is determined to be unexpected, and if not, this result whether the GNSS related position is determined to be unexpected or to be expected depends on the one or more GNSS related updated parameter (e.g. as explained with respect to method 300) and/or depends on the reference position (e.g. as explained with respect to method 300').

As an example embodiment, the location proofing client 510 may be configured to provide the reference position to at least one application or an other client (e.g. customer application 520) of the apparatus 100 if said GNSS related position is determined to be unexpected. Thus, if it is determined in action 240 that the GNSS related position is determined to be unexpected, e.g. in response to the above mentioned request by another client or another application of the apparatus 100 can provide the result whether the GNSS related position is expected or unexpected for a position of the apparatus 100 to the other client or other application (e.g. indicated by exemplarily signaling 517 in Fig. 5 to customer application 520). Furthermore, as an example, the location proofing client 510 may provide the reference position to the other client or at least one application (e.g. customer application 520) such that the other client or the at least one application may use the reference position instead of the GNSS related position (which is considered to be unexpected), in particular if it is determined in action 240 that the GNSS related position is considered to be unexpected).

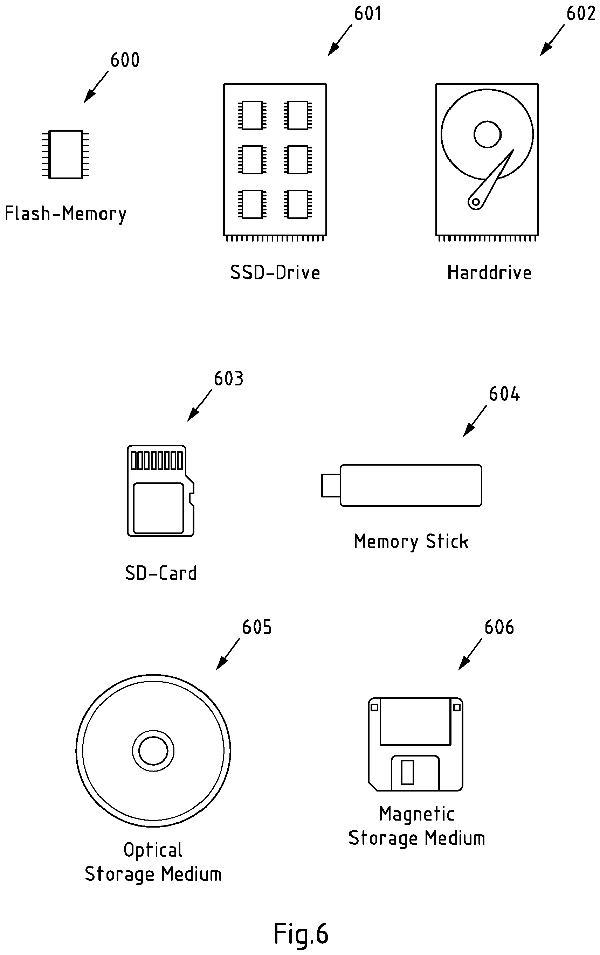

Fig. 6 is a schematic illustration of examples of tangible and non-transitory computer-readable storage media according to the present invention that may for instance be used to implement memory 402 of Fig. 4. To this end, Fig. 6 displays a flash memory 600, which may for instance be soldered or bonded to a printed circuit board, a solid-state drive 601 comprising a plurality of memory chips (e.g. Flash memory chips), a magnetic hard drive 602, a Secure Digital (SD) card 603, a Universal Serial Bus (USB) memory stick 604, an optical storage medium 605 (such as for instance a CD-ROM or DVD) and a magnetic storage medium 606.

Any presented connection in the described embodiments is to be understood in a way that the involved components are operationally coupled. Thus, the connections can be direct or indirect with any number or combination of intervening elements, and there may be merely a functional relationship between the components.

Further, as used in this text, the term 'circuitry' refers to any of the following:
(a) hardware-only circuit implementations (such as implementations in only analog and/or digital circuitry)
(b) combinations of circuits and software (and/or firmware), such as: (1) to a combination of processor(s) or (2) to sections of processor(s)/ software (including digital signal processor(s)), software, and memory(ies) that work together to cause an apparatus, such as a mobile phone, to perform various functions) and
(c) to circuits, such as a microprocessor(s) or a section of a microprocessor(s), that re-quire software or firmware for operation, even if the software or firmware is not physically present.

This definition of 'circuitry' applies to all uses of this term in this text, including in any claims. As a further example, as used in this text, the term 'circuitry' also covers an implementation of merely a processor (or multiple processors) or section of a processor and its (or their) accompanying software and/or firmware. The term 'circuitry' also covers, for example, a baseband integrated circuit or applications processor integrated circuit for a mobile phone.

Any of the processors mentioned in this text, in particular but not limited to processor 401 of Fig. 4, could be a processor of any suitable type. Any processor may comprise but is not limited to one or more microprocessors, one or more processor(s) with accompanying digital signal processor(s), one or more processor(s) without accompanying digital signal processor(s), one or more special-purpose computer chips, one or more field-programmable gate arrays (FPGAS), one or more controllers, one or more application-specific integrated circuits (ASICS), or one or more computer(s). The relevant structure/hardware has been programmed in such a way to carry out the described function.

Moreover, any of the actions or steps described or illustrated herein may be implemented using executable instructions in a general-purpose or special-purpose processor and stored on a computer-readable storage medium (e.g., disk, memory, or the like) to be executed by such a processor. References to 'computer-readable storage medium' should be understood to encompass specialized circuits such as FPGAs, ASICs, signal processing devices, and other devices.

The wording "A, or B, or C, or a combination thereof' or "at least one of A, B and C" may be understood to be not exhaustive and to include at least the following: (1) A, or (2) B, or (3) C, or (4) A and B, or (5) A and C, or (6) B and C, or (7) A and B and C.

It will be understood that all presented embodiments are only exemplary, and that any feature presented for a particular exemplary embodiment may be used with any aspect of the invention on its own or in combination with any feature presented for the same or another particular exemplary embodiment and/or in combination with any other feature not mentioned. It will further be understood that any feature presented for an example embodiment in a particular category may also be used in a corresponding manner in an example embodiment of any other category.

## Claims

1. A method performed by a mobile device, comprising:
- obtaining a GNSS related position associated with the mobile device;
- obtaining one or more GNSS related update parameters;
- obtaining a reference position associated with the mobile device; and
- determining, at least partially based on the one or more GNSS related update parameters and the reference position, whether the GNSS related position is expected or unexpected for a position of the mobile device.

2. The method according to claim 1, wherein said GNSS related position is considered to be potentially manipulated if it is determined that said GNSS related position is unexpected for a position of the mobile device.

3. The method according to any of claims 1 to 2, wherein the GNSS related position is determined to be unexpected:
- if said one or more GNSS related update parameter are at least partially inconsistent with the GNSS related position; and/or
- if a comparison between the reference position and the GNSS related position indicates an unexpected GNSS related position.

4. The method according to any of claim 1 to 3, wherein the GNSS related position is determined to be expected:
- if said one or more GNSS related update parameters are consistent with the GNSS related position; and
- if a comparison between the reference position and the GNSS related position indicates an expected GNSS related position.

5. The method according to any of claims 3 to 4, wherein said comparison between the reference position and the GNSS related position comprises determining a representative of a distance between the reference positon and the GNSS related position, and, checking whether the distance indicated by the representative of a distance between the reference positon and the GNSS related position is above a threshold, and if yes, determining the GNSS related position to be unexpected, and, in particular, if not, determining the GNSS related position to be unexpected.

6. The method according to any of claims 1 to 5, wherein said one or more GNSS related update parameters comprise at least one of:
- at least one GNSS engine status update parameter; and
- at least one GNSS satellite measurement update data.

7. The method according to claim 6, wherein said at least one GNSS satellite measurement update data comprise raw data and/or computed information.

8. The method according to any of claims 3 to 7, comprising determining whether said one or more GNSS related update parameters are at least partially inconsistent with the GNSS related position.

9. The method according to claim 8, comprising tracking said one or more GNSS related update parameters, wherein said determining whether said one or more GNSS related update parameters are at least partially inconsistent with the GNSS related position comprises analyzing a history of platform GNSS engine status update parameter and/or GNSS satellite measurement update data.

10. The method according to any of claims 1 to 9, wherein said reference position associated with the mobile device is obtained based at least partially on a non-GNSS positioning or is obtained from a specific GNSS provider, in particular a customized GNSS provider.

11. The method according to claim 10, wherein said non-GNSS positioning is at least one of:
- a radio-network based positioning, and
- a sensor-based positioning.

12. The method according to claim 11, wherein said sensor-based positioning is based on sensor information determined from at least one of the following sensors: an inertial or motion sensor; a shock sensor, a magnetometer, and an optical sensor.

13. The method according to any of claims 11 and 12, wherein said radio-network based positioning is one of:
- a cellular-based positioning, in particular, a cellular-phone-system-based positioning;
- a WLAN-based positioning;
- a Bluetooth-based positioning, in particular a Bluetooth Low Energy radio positioning:
- a low-power wide-area network based positioning.

14. The method according to any of claims 1 to 13, wherein said reference position associated with the mobile device is obtained in response to transmitting a request to location service.

15. The method according to any of claims 1 to 14, wherein said mobile device comprises an operating system providing a mock location detection functionality, wherein said determining whether the GNSS related position is expected or unexpected for a position of the mobile device, is further based at least partially on a result obtained from the mock location detection functionality.

16. The method according to claim 15, wherein the operating system is based on Android or is an Android operating system, the method comprising at least one of:
- obtaining the result from the mock location detection functionality by using the "isMockLocationEnable" application interface if the operating system application interface level is less than 18; and
- obtaining the result from the mock location detection functionality by using the "isFromMockLocation" application interface if the operating system application interface level is equal to or higher than 18.

17. The method according to any of claims 1 to 16, performed at least partially or completely by a client of the mobile device.

18. The method according to claim 17, wherein said client is configured to provide an information being indicative of the result whether the GNSS related position is expected or unexpected for a position of the mobile device to at least one application or an other client of the mobile device.

19. The method according to any of claims 17 and 19, comprising providing the reference position from the client to at least one application or an other client of the mobile device if said GNSS related position is determined to be unexpected.

20. The method according to any of claims 1 to 19, comprising determining the reference position by the mobile device.

21. A computer program code, the computer program code when executed by a processor causing an apparatus to perform the method according to any of claims 1 to 20.

22. An apparatus, the apparatus comprising means for performing the method according to any of claims 1 to 20

23. The apparatus according to claim 22, wherein the apparatus is a mobile device or a module for a module device.
